Europäisches Patentamt

European Patent Office

Office européen des brevets

(11) Publication number: **0 192 209**
**B1**

## EUROPEAN PATENT SPECIFICATION

(45) Date of publication of patent specification: **17.01.90**

(51) Int. Cl.⁵: **G 06 F 13/18**

(21) Application number: **86101935.4**

(22) Date of filing: **15.02.86**

(54) Address contention arbitrator for multi-port memories.

(30) Priority: **20.02.85 US 703248**

(43) Date of publication of application:
**27.08.86 Bulletin 86/35**

(45) Publication of the grant of the patent:
**17.01.90 Bulletin 90/03**

(84) Designated Contracting States:
**DE FR GB IT**

(56) References cited:
**EP-A-0 106 557**

**ELECTRONICS INTERNATIONAL, vol. 55, no. 20,
October 1982, pages 47-48, New York, US; W.R.
IVERSEN: "Dual-port RAM transfers data more
efficiently"**

(73) Proprietor: **HONEYWELL INC.
Honeywell Plaza
Minneapolis Minnesota 55408 (US)**

(72) Inventor: **Hwang, Yun-Sheng
1639 Mariani Drive
Sunnyvale, CA 94087 (US)**

(74) Representative: **Rentzsch, Heinz et al
Honeywell Europe S.A. Holding KG Patent- und
Lizenzabteilung Kaiserleistrasse 55
D-6050 Offenbach am Main (DE)**

Courier Press, Leamington Spa, England.

## Description

The present invention relates to multi-port electronic memories and more particularly to systems for detecting and arbitrating contention between the ports thereof.

A block of electronic memory is typically organized into individual memory locations each of which contain one or more binary digits (bits). Each such location has associated therewith an address. In order to read information from a particular memory location or to write information into that memory location, that location address is transmitted to the memory on an address bus. The address signal is typically provided as an n bit signal where n is a positive integer.

Often a particular application will require that more than one processor, or other type of circuitry, be allowed to access memory locations in the same block of memory. Various approaches have been used in order to allow this. Under one approach circuitry is provided to give each circuit requiring access to the block of memory exclusive access at certain times. While this will work in some circumstances under other circumstances a preferrable arrangement would be to allow all circuits requiring such access to have it simultaneously. Memory circuits which allow a plurality of external circuits access to memory locations within the same block of memory at the same time are called dual or multi-port memories. Such memories will have a plurality of address inputs and a plurality of data input output (I/O) ports. One data I/O port is associated with each address input. If a read operation is to be performed, circuitry associated with the memory will provide the value stored in the memory at the location specified on the address bus to the I/O port associated with that address bus. Similarly, if a write operation is to be performed the value arriving at an I/O port is stored in the memory at the location specified on the associated address bus.

Such an arrangement will work under most circumstances. However, if two circuits both having access to the memory attempt to access the same memory location within that memory at the same time, problems may arise. The situation may be particularly acute if one of the circuits attempts to write information into a memory location while the other circuit is either reading from or writing to that same location. In order to prevent problems from arising under those circumstances circuitry must be provided to determine which circuitry attempted to access the memory location first and to provide a busy signal to the other circuit. This busy signal prevents that circuit from accessing the memory untl the first circuit has completed its process. This problem is solved by the invention as characterized in Claim 1.

The present invention provides a system for detecting address contention and resolving such contention in a multi-port memory. In an embodiment having two ports, designated port A and port B, the system works by comparing the address signals arriving at port A with a delayed version of the address signals which arrived at port B. If, when the address signals first arrive at port A, a match is found, address contention exists. Furthermore, since the port B address signals used in the comparison were delayed, clearly the port B address signals had to be there first in order for the match to occur. Therefore, a busy signal is generated for port A until port B completes its access of the memory location. Similar circuitry is provided for comparing current address signals at port B with delayed address signals from port A. This circuit in turn generates busy signals, when required, for port B. The system may be expanded for use with more than two ports by providing additional delay and comparison circuits. Further details and improvements are described in the subclaims. The invention is explained in detail by reference to an embodiment shown in the drawings; wherein

Figure 1 shows the arrangement for conditioning address signals for comparison;

Figure 2 shows an example of a delay circuit which could be used with the invention; and

Figure 3 shows the address comparison and busy signal generator of the invention.

The present invention will be described for a two port memory. Those skilled in the art will readily see that it is not limited to such use, however, and could be used in systems having more than two ports. Furthermore, each address will be assumed to have n bits where n is a positive integer. Although only four address lines are shown for each address port, typically n would be greater than four. The address signals arriving at the port A address input will be designated $A_{a0}, A_{a1}, \ldots A_{a(n-1)}$. The delayed version of those signals will be designated $A_{a0D}, A_{a1D}, \ldots, A_{a(n-1)D}$. Similar designations are used for the address signals arriving at the port B address input.

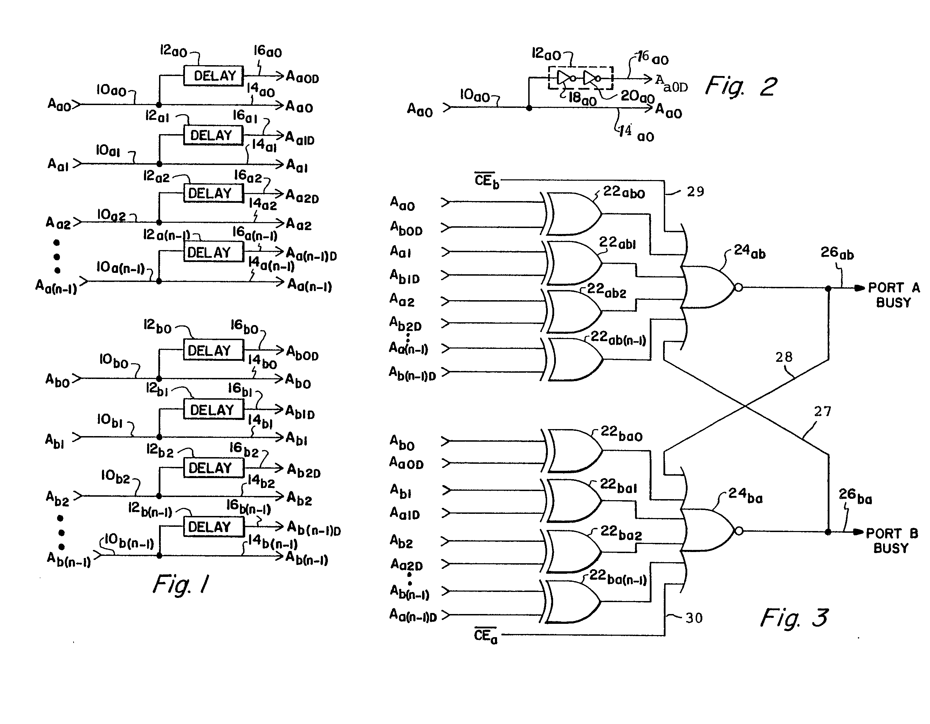

In the system of Figure 1 the signal $A_{a0}$ arrives and is applied to signal line $10_{a0}$. Signal line $10_{a0}$ is electrically connected to time delay generator $12_{a0}$ and to output region $14_{a0}$. Time delay generator $12_{a0}$ is electrically connected to output region $16_{a0}$. Therefore, the original address signal $A_{a0}$ is available at output region $14_{a0}$ and the delayed address signal $A_{a0}$ is available at output region $16_{a0}$. Similarly, delayed versions of the remaining address signals arriving at the port A address input are also produced and provided at appropriate output regions. Likewise, the remaining original address signals arriving at the port A address input are provided at their appropriate output regions. As also shown in Figure 1 similar current and delayed address signals are provided for those address signals arriving at the port B address input.

Figure 2 illustrates an example of an electronic system which could be used as an electronic delay such as delay generator $12_{a0}$ of Figure 1. In this embodiment the delay is simply two elec-

tronic inverters $18_{a0}$ and $20_{a0}$. The gate delay of the inverters is sufficient to be the delay for the invention. The use of two inverters to provide the delay is preferred in most systems because inverters may be easily provided. The invention is not limited to the use of a pair of inverters, however, and other methods of providing the delay may be used.

Turning now to Figure 3 the system for determining whether address contention exists, and resolving it if it does, is shown. In Figure 3 are shown a series of EXCLUSIVE OR gates, $22_{ab0}$, $22_{ab1}$, $22_{ab2}$, $22_{ab(n-1)}$, $22_{ba0}$, $22_{ba1}$, $22_{ba2}$, and $22_{ba(n-1)}$. In Figure 3 the use of the subscript ab indicates that the undelayed a signal is combined with the delayed b signal in that EXCLUSIVE OR gate, and the use of the subscript ba indicates the opposite. The number in each subscript indicates the order number of the address bit which is combined in that EXCLUSIVE OR gate. Following this convention EXCLUSIVE OR gate $22_{ab0}$ combines the current signal $A_{a0}$ and the delayed signal $A_{b0D}$. If the signals $A_{a0}$ and $A_{b0D}$ are both zero or both one the output of EXCLUSIVE OR gate $22_{ab0}$ will be zero. If the signals $A_{a0}$ and $A_{b0D}$ differ from one another, however, the output of EXCLUSIVE OR gate $22_{ab0}$ will be equal to one. Similarly, the other EXCLUSIVE OR gates produce output signals based on the input signals received.

The outputs from each of EXCLUSIVE OR gates $22_{ab0}$ through $22_{ab(n-1)}$ serve as input signals to NOR gate $24_{ab}$. Similarly, the output signals from EXCLUSIVE OR gates $22_{ba0}$ through $22_{ba(n-1)}$ serve as input signals to NOR gate $24_{ba}$. Furthermore, the output signal from NOR gate $24_{ba}$ serves via line 27 as an input signal for NOR gate $24_{ab}$ and the output signal from NOR gate $24_{ab}$ serves via line 28 as an input signal to NOR gate $24_{ba}$. Each of NOR gates $24_{ab}$ and $24_{ba}$ have provided thereto as additional input signals $CE_b$ and $CE_a$, respectively. Not all memory systems use the $CE_a$ af $CE_b$ signals, and they are not required by the invention. Therefore, the invention will first be described without these signals.

According to the standard operation of a NOR gate if any input signal to either of NOR gates $24_{ab}$ or $24_{ba}$ is one the output of that NOR gate will be zero. If all of the inputs to either of NOR gates $24_{ab}$ or $24_{ba}$ are equal to zero the output of that NOR gate will be equal to one.

The operation of the system of Figure 3 will now be explained, assuming that initially no address contention exists. When that is the case, at least one of the bits presented at port A must differ from the corresponding bit presented at port B. Therefore, at least one of EXCLUSIVE OR gates $22_{ab0}$ through $22_{ab(n-1)}$ must receive differing input signals, and thus provide an output signal equal to one. Therefore, at least one of the input signals to NOR gate $24_{ab}$ must be equal to one causing NOR gate $24_{ab}$ to have an output signal equal to zero. Similarly, NOR gate $24_{ba}$ must receive at least one input signal equal to one and so will produce an output signal equal to zero.

If a memory operation is initiated by a call through port B, a memory location address will be transmitted to the port B address input. That address is applied to input lines $A_{b0}$ through $A_{b(n-1)}$. A short time later that same address will be applied, in delayed form, to lines $A_{b0D}$ through $A_{b(n-1)D}$. If a memory operation is then initiated through port A, the address called will be applied to input lines $A_{a0}$ through $A_{(n-1)}$. If the same memory location has been addressed through both ports A and B the input signals to each of EXCLUSIVE OR gates $22_{ab0}$ through $22_{ab(n-1)}$ will be either two ones or two zeros. Therefore, each of EXCLUSIVE OR gates $22_{ab0}$ through $22_{ab(n-1)}$ will produce an output signal equal to zero. As explained previously, NOR gate $24_{ba}$ is producing an output squal to zero also. Therefore, all input signals to NOR gate $24_{ab}$ are equal to zero and thus that NOR gate produces an output signal equal to one. This signal is used as a busy signal to prevent port A from having access to the requested memory location until port B has completed its access. Furthermore, the fact that the output signal from NOR gate $24_{ab}$ is used as an input signal to NOR gate $24_{ba}$ insures that NOR gate $24_{ba}$ will continue to receive at least one input signal equal to one even after the delayed address sent to port A arrives at the input lines to EXCLUSIVE OR gates $22_{ba0}$ through $22_{ba(n-1)}$. In that way, port B will not receive a busy signal.

The above description explains how the present invention detects memory contention and resolves it in favor of port B, if port B were the first port to be addressed. Similarly, contention would be detected and resolved in favor of port A if port A were the first port to be addressed. If the two ports are simultaneously addressed both will attempt to produce a busy signal and allow access to the other port. In theory this could cause the system to lock out all further attempted memory accesses. In reality, however, even if NOR gates $24_{ab}$ and $24_{ba}$ were designed to be identical, processing variations would be expected to cause NOR gates $24_{ab}$ and $24_{ba}$ to differ enough so as to prevent such lock out. Specifically, one of those gates will typically have greater capacitance than the other. The gate with higher capacitance will be able to force the other to a zero output value. This design could be left to chance so that either port A or port B would have precedence in a simultaneous addressing situation, or one gate or the other could be intentionally designed to have greater capacitance, insuring that all memories produced would have a preselected one of ports A and B having precedence.

The discussion above has not dealt with the signals $CE_a$ and $CE_b$. These are chip enable signals which are used in some, but not all, memory systems. Signal $CE_a$ is equal to zero when a memory operation is occurring through port A and equal to one if no such operation is occurring. Similarly, $CE_b$ is equal to zero if a memory operation is occurring through port B and is equal to one if no such operation is occurring. If the memory system in which the invention is to be used utilizes such chip enable signals, signal $\overline{CE}_b$ should be connected via line 29 to NOR gate $24_{ab}$ and signal $\overline{CE}_a$ should be connected via line 30 to NOR gate $24_{ba}$ as is shown in Figure 3. When this is done a port is not considered to have begun addressing the memory until the proper address location has been transmitted to that port and the associated chip enable signal has gone to a value of zero.

As explained previously, this discussion has described a system for detecting and resolving memory contention in a dual port ram. Those skilled in the art will readily see that the same system could be used with more than two ports. If a third port, port C, were added a similar circuit would be provided to resolve contention between A and C. A third similar circuit would be required to resolve contention between ports B and C. Thus any number of ports could be accommodated under the present invention, simply by providing circuits to resolve contention between each pair of ports.

## Claims

1. Address contention detection and arbitration system for a memory having at least first (A) and second (B) ports, said first and second ports being adapted to receive first and second address signals, respectively, characterized by

a) first $(12_{a0}-12_{a(n-1)})$ and second $(12_{b0}-12_{b(n-1)})$ delay means for producing first and second delayed address signals from said first $(A_{a0}-A_{a(n-1)})$ and second $(A_{b0}-A_{b(n-1)})$ address signals, respectively;

b) first comparison means $(22_{ab0}-22_{ab(n-1)})$ for comparing said first address signal with said second delayed address signal and generating a busy signal for said first port if said first address signal and said second delayed address signal are identical;

c) second comparison means $(22_{ba0}-22_{ba(n-1)})$ for comparing said second address signal with said first delayed address signal and generating a busy signal for said second port if said second address signal and said first delayed address signal are identical;

d) first suppression means (27) to prevent said first comparison means from generating a busy signal for said first port (A) when said second comparison means is generating a busy signal for said second port (B); and

e) second suppression means (28) to prevent said second comparison means from generating a busy signal for said second port (B) when said first comparison means is generating a busy signal for said first port (A).

2. The system of Claim 1, characterized in that said first and second address signals are n bit binary digital signals, where n is a positive integer, and each of said comparison means (22) includes n EXCLUSIVE OR gates.

3. The system of Claim 2, characterized in that each of said EXCLUSIVE OR logic gates has first and second inputs and an output, said EXCLUSIVE OR gates $(22_{ab0}-22_{ab(n-1)})$ of said first comparison means $(22_{ab})$ being adapted to accept a signal representative of one bit of said n bits of said first address signal on said first input and a corresponding bit of said n bits of said second delayed address signal on said second input, and each of said EXCLUSIVE OR gates $(22_{ba0}-22_{ba(n-1)})$ of said second comparison means $(22_{ba})$ being adapted to accept one bit of said n bits of said second address signal on said first input and one bit of said n bits of said first delayed address signal on said second input.

4. The system of Claim 3, characterized in that each of said first and second comparison means includes a combining logic gate $(24_{ab}; 24_{ba})$.

5. The system of Claim 4, characterized in that said combining logic gates $(24_{ab}, 24_{ba})$ are NOR logic gate means having a plurality of inputs, each of said outputs of said EXCLUSIVE OR logic gates $(22_{ab0}-22_{ab(n-1)})$ of said first comparison means $(22_{ab})$ being electrically connected to one of said inputs of said first comparison NOR gates $(24_{ab})$, and each of said outputs of said EXCLUSIVE OR gates $(22_{ba0}-22_{ba(n-1)})$ of said second comparison means $(22_{ba})$ being electrically connected to one of said inputs of said second comparison NOR gates $(24_{ba})$.

6. The system of Claim 5, characterized in that said first suppression means comprises a first electrically conducting means (27) electrically connecting said second comparison NOR gate $(24_{ba})$ output $(26_{ba})$ with one of said inputs of said first comparison NOR gates $(24_{ab})$ and said second suppression means includes a second electrically conducting means (28) electrically connecting said first comparison NOR gate $(24_{ab})$ output $(26_{ab})$ with one of said inputs of said second comparison NOR gate $(24_{ba})$.

7. The system of Claim 6, characterized by said first (A) and second (B) ports having associated therewith respectively, first $(\overline{CE}_a)$ and second $(\overline{CE}_b)$ chip enable signal input means;

third electrical conducting means (29) provided between said second chip enable signal input $(\overline{CE}_b)$ and one of said first NOR gate $(24_{ab})$ inputs; and

fourth electrical conducting means (30) provided between said first chip enable signal input $(\overline{CE}_a)$ and one of said inputs of said second NOR gate $(24_{ba})$.

## Patentansprüche

1. System zum Feststellen und Entscheiden von Fällen von Adressierkonkurrenz für einen Speicher mit wenigstens ersten (A) und zweiten (B) Eingängen zum Empfang von ersten bzw. zweiten Adressiersignalen, gekennzeichnet durch

a) erste $(12_{a0}-12_{a(n-1)})$ und zweite $(12_{b0}-12_{b(n-1)})$ Verzögerungsmittel zum Erzeugen von ersten und zweiten Verzögerten Adressiersignalen aus den genannten ersten $(A_{a0}-A_{a(n-1)})$ bzw. zweiten $(A_{b0}-A_{b(n-1)})$ Adressiersignalen;

b) einer ersten Vergleichseinrichtung

$(22_{ab0}-22_{ab(n-1)})$ zum Vergleich des ersten Adressiersignals mit dem zweiten verzögerten Adressiersignal und zur Erzeugung eines Belegtsignals für den ersten Eingang falls das erste Adressiersignal und das zweite verzögerte Adressiersignal übereinstimmen;

c) einer zweite Vergleichseinrichtung $(22_{ba0}-22_{ba(n-1)})$ zum Vergleich des zweiten Adressiersignals mit dem ersten verzögerten Adressiersignal und zur Erzeugung eines Belegtsignals für den zweiten Eingang sofern das zweite Adressiersignal und das erste verzögerte Adressiersignal übereinstimmen;

d) einer ersten Unterdrückungsschaltung (27), welche die erste Vergleichseinrichtung an der Erzeugung eines Belegtsignals für den ersten Eingang (A) hindert, wenn die zweite Vergleichseinrichtung ein Belegtsignal für den zweiten Eingang (B) erzeugt; und

e) eine zweite Unterdrückungsschaltung (28), welche verhindert, daß die zweite Vergleichseinrichtung ein Belegtsignal für den zweiten Eingang (B) erzeugt, wenn die erste Vergleichseinrichtung ein Belegtsignal für den ersten Eingang (A) erzeugt.

2. System nach Anspruch 1, dadurch gekennzeichnet, daß die ersten und zweiten Adressiersignale digitale n-Bit-Signale sind, wobei n eine positive ganze Zahl ist, und daß jede der Vergleichseinrichtungen (22) n EXCLUSIV-ODER-Gatter enthält.

3. System nach Anspruch 2, dadurch gekennzeichnet, daß jedes der EXCLUSIV-ODER-Gatter erste und zweite Eingänge sowie einen Ausgang aufweist, die EXCLUSIV-ODER-Gatter $(22_{ab0}-22_{ab(n-1)})$ der ersten Vergleichseinrichtung $(22_{ab})$ zur Aufnahme eines Signals entsprechend eines der n-Bits des ersten Signals am ersten Eingang und eines entsprechenden Bits der n-Bits des zweiten verzögerten Adressiersignals am zweiten Eingang vorgesehen sind, und jedes der EXCLUSIV-ODER-Gatter $(22_{ba0}-22_{ba(n-1)})$ der zweiten Vergleichseinrichtung $(22_{ba})$ zum Empfang eines der n-Bits des zweiten Adressiersignals am ersten Eingang und eines der n-Bits des ersten verzögerten Adressiersignals am zweiten Eingang eingerichtet ist.

4. System nach Anspruch 3, dadurch gekennzeichnet, daß jede der ersten und zweiten Vergleichseinrichtungen ein kombinierendes Logikgatter $(24_{ab}, 24_{ba})$ enthält.

5. System nach Anspruch 4, dadurch gekennzeichnet, daß die kombinierenden Logikgatter $(24_{ab}, 24_{ba})$ logische NOR-Gatter mit mehreren Eingängen sind, jeder der Ausgänge der EXCLUSIV-ODER-Gatter $(22_{ab0}-22_{ab(n-1)})$ der ersten Vergleicheseinrichtung $(22_{ab})$ elektrisch an einen der Eingänge der NOR-Gatter $(24_{ab})$ der ersten Vergleichseinrichtung angeschlossen sind, und jeder der Ausgänge der EXCLUSIVE-ODER-Gatter $(22_{ab0}-22_{ba(n-1)})$ der zweiten Vergleichseinrichtung $(22_{ba})$ elektrisch an einen der Eingänge der NOR-Gatter $(22_{ba})$ der zweiten Vergleichseinrichtung angeschlossen sind.

6. System nach Anspruch 5, dadurch gekennzeichnet, daß die erste Unterdrückungsschaltung eine erste elektrische Leitungsverbindung (27) ist, welche den Ausgang $(26_{ba})$ des NOR-Gatters $(24_{ba})$ der zweiten Vergleichseinrichtung mit einem der Eingänge der NOR-Gatter $(24_{ab})$ der ersten Vergleichseinrichtung verbindet und die zweite Unterdrückungsschaltung eine zweite elektrische Leitungsverbindung (28) enthält, welche den Ausgang $(26_{ab})$ des NOR-Gatters $(24_{ab})$ der ersten Vergliechseinrichtung mit einem der Eingänge des NOR-Gatters $(24_{ba})$ der zweiten Vergleichseinrichtung verbindet.

7. System nach Anspruch 6, gekennzeichnet, durch den ersten (A) und zweiten (B) Eingängen zugeordnete erste $(\overline{CE}_a)$ und zweite $(\overline{CE}_b)$ Chipaktivierungssignaleingänge;

eine dritte elektrische leitende Verbindung (29) zwischen dem zweiten Chipaktivierungssignal-Eingang $(\overline{CE}_b)$ und einen der Eingänge des ersten NOR-Gatters $(24_{ab})$; sowie eine vierte elektrisch leitende Verbindung (30) zwischen dem ersten Chipaktivierungssignaleingang $(\overline{CE}_a)$ und einem der Eingänge des zweiten NOR-Gatters $(24_{ba})$.

## Revendications

1. Système de détection et d'arbitrage de contentions d'adresse pour une mémoire possédant au moins un premier point d'accès (A) et un second point d'accès (B), lesdits premier et second points d'accès étant adaptés pour recevoir respectivement des premier et second signaux d'addresses, caractérisé par:

a) des premiers moyens de retardement $(12_{a0}-12_{a(n-1)})$ et des seconds moyens de retardement $(12_{b0}-12_{b(n-1)})$ servant à produire des premier et second signaux d'adresses retardés respectivement à partir dudit premier signal d'adresse $(A_{a0}-A_{a(n-1)})$ et dudit second signal d'adresse $(A_{b0}-A_{b(n-1)})$;

b) des premiers moyens de comparaison $(22_{ab0}-22_{ab(n-1)})$ servant à comparer ledit premier signal d'adresse audit second signal d'adresse retardé et à produire un signal d'occupation pour ledit premier point d'accès si ledit premier signal d'adresse et ledit second signal d'adresse retardé sont identiques;

c) des seconds moyens de comparison $(22_{ba0}-22_{ba(n-1)})$ servant à comparer ledit second signal d'adresse audit premier signal d'adresse retardé et à produire un signal d'occupation pour ledit second point d'accès si ledit second signal d'adresse et ledit premier signal d'adresse retardé sont identiques;

d) des premiers moyens de suppression (27) servant à empêcher que lesdits premiers moyens de comparaison ne produisent un signal d'occupation pour ledit premier point d'accès (A) lorsque lesdits seconds moyens de comparaison délivrent un signal d'occupation pour ledit second point d'accès (B); et

e) des seconds moyens de suppression (28) servant à empêcher que lesdits seconds moyens de comparaison ne produisent un signal d'occupation pour ledit second point d'accès (B) lorsque lesdits premiers moyens de comparaison produisent un signal d'occupation pour ledit premier point d'accès (A).

2. Système selon la revendication 1, caractérisé en ce que lesdits premier et second signaux d'adresses sont des signaux numériques binaires à n bits, n étant un entier positif, et chacun desdits moyens de comparaison (22) comporte n portes OU-EXCLUSIF.

3. Système selon la revendication 2, caractérisé en ce que chacune desdites portes logiques OU-EXCLUSIF, possède des première et seconde entrées et une sortie, lesdites portes OU-EXCLU-SIFE (22$_{ab0}$−22$_{ab(n-1)}$) desdits premiers moyens de comparaison (22$_{ab}$) étant adaptées pour recevoir le signal représentatif d'un bit faisant partie desdits n bits dudit premier signal d'adresse appliqué à ladite première entrée et un bit correspondant faisant partie desdits n bits dudit second signal d'adresse retardé appliqué à ladite seconde entrée, et chacune desdites portes OU-EXCLUSIF (22$_{ba0}$−22$_{ba(n-1)}$) desdits seconds moyens de comparaison (22$_{ba}$) étant adaptée pour accepter un bit faisant partie desdits n bits dudit second signal d'adresse appliqué à ladite première entrée et un bit faisant partie desdits n bits dudit premier signal d'adresse retardé appliqué à ladite seconde entrée.

4. Système selon la revendication 3, caractérisé en ce que chacun desdits premiers et seconds moyens de comparaison comporte une porte logique combinatoire (24$_{ab}$; 24$_{ba}$).

5. Système selon la revendication 4, caractérisé en ce que lesdites portes logiques combinatoires (24$_{ab}$, 24$_{ba}$) sont des moyens en forme de portes logiques NON-comportant une pluralité d'entrées, chacune desdites sorties desdites portes logiques OU-EXCLUSIF (22$_{ab0}$−22$_{ab(n-1)}$) desdits premiers moyens de comparaison (22$_{ab}$) étant raccordée électriquement à l'une desdites entrées desdites premières portes NON-OU de comparaison (24$_{ab}$), et chacun desdites sorties desdites ports OU-EXCLUSIF (22$_{ba0}$−22$_{ba(n-1)}$) desdits seconds moyens de comparaison (22$_{ba}$) étant raccordée électriquement à l'une desdites entrées desdites secondes portes NON-OU de comparaison (24$_{ba}$).

6. Système selon la revendication 5, caractérisé en ce que lesdits premiers moyens de suppression comprenant des premiers moyens électriquement conducteurs (27) raccordant électriquement ladite sortie (26$_{ba}$) de ladite seconde porte NON-OU de comparaison (24$_{ba}$) à l'une desdites entrées desdites premières portes NON-OU de comparaison (24$_{ab}$), et que lesdits seconds moyens de suppression incluent des seconds moyens électriquement conducteurs (28) raccordant électriquement ladite sortie (26$_{ab}$) de la première porte NON-OU de comparaison (24$_{ab}$) à l'une desdites entrées de ladite seconde porte NON-OU de comparaison (24$_{ba}$).

7. Système selon la revendication 6, caractérisé en ce que

des premiers moyens d'entrée $\overline{CE_a}$ et des seconds moyens d'entrée $\overline{CE_b}$ du signal de validation de microplaquette sont asscociés respectivement audit premier point d'accès (A) et audit second point d'accès (B);

des troisièmes moyens électriquement conducteurs (29) sont prévus entre ladite seconde entrée $\overline{CE_b}$ du signal de validation de microplaquette et l'une desdites entrées de la première porte NON-OU (24$_{ab}$); et

des quatrièmes moyens de raccordement électrique (30) sont prévus entre ladite première entrée $\overline{CE_a}$ du signal de validation de microplaquette et l'une desdites entrées de ladite seconde porte NON-OU (24$_{ba}$).

Fig. 1

Fig. 2

Fig. 3

EP 0 192 209 B1